# EUROPEAN PATENT APPLICATION

(11) **EP 0 979 772 A2**
(43) Date of publication of application: **16.02.2000**
(21) Application number: 99102394.6
(22) Date of filing: 08.02.1999
(51) Int. Cl.: B62L 1/00, B62L 3/02, B62K 25/24

(54) **Mountain bike front suspension fork with disk brake means**

(30) Priority: 13.08.1998 US 133680
(71) Applicant: Answer Products, Inc., Valencia, California 91355 (US)
(72) Inventor: Danter, Laurence K., Newbury Park, California 91320 (US)
(74) Representative: Grünecker, Kinkeldey, Stockmair & Schwanhäusser Anwaltssozietät

(57) **Abstract**

A front suspension fork (160) for a mountain bike is disclosed wherein the operating device for displacing one of a pair of caliper brake shoes (194,196) toward braking engagement with a brake disk (180) on the front wheel of the bike is mounted within a chamber contained in a housing (182) that is formed integrally with the lower end (160b) of one leg of the fork. A flexible linear connecting device (206) for operating the operating device includes an intermediate portion that is guided by a guide arrangement formed integrally with the one leg of the fork. In the case of a mechanical operating device, the flexible connecting device comprises a coaxial cable having a movable inner wire member (208) that is connected at one end with the bicycle hand grip (204), and at the other end with an operating lever (184) that is pivotally connected with the housing. In the case of an hydraulic operating device, the flexible connecting device (306) comprises a hose that is connected between the hydraulic device (370) and a master cylinder (372) arranged adjacent the hand grip (308). Alternatively, when the master cylinder is mounted on the housing, the flexible connecting device comprises a coaxial cable having an inner member that is connected at one end with the hand grip and at the outer end with an operating lever that associated with the master cylinder.

## Description

### Background of the Invention

### Field of the Invention

This invention relates to a front suspension fork for mountain bikes and the like, wherein the suspension fork includes an integral housing portion containing a chamber for receiving the mechanical, hydraulic, or mechanical-hydraulic operating means of a disk brake system. Also formed integrally with the suspension fork are support means for supporting at least an intermediate portion of the flexible connecting means that connect the handlebar-mounted hand grip actuator with the disk brake operating means.

### Brief Description of the Prior Art

It is well known in the patented prior art to provide mechanically or hydraulically-operable disk brake means on the front wheel of a motorcycle, as shown, for example, by the patents to Petty No. 4,159,123, Kawaguchi No. 3,989,261, and Buckley et al. No. 5,647,459. Various types of mechanical disc brake operating systems for motorcycles and bicycles are shown by the patents to Buckley No. 4,715,479 and Hunnicutt et al No. 5,000,294, and hydraulic operating systems are disclosed in the patents to Hinkens et al No. 5,390,771, Reisinger No. 5,193,833 and Tsurmuumaki et al. No. 5,092,421, among others. Conventionally, handlebar-mounted hand grip means are utilized in connection with a flexible connecting means to actuate the disc brake means. In the case of mechanical systems and hydraulic systems having a master cylinder on the operating means adjacent the brake operating means, a coaxial cable is used as the flexible connecting means. When the master cylinder of the hydraulic system is mounted adjacent the hand-grip actuator, a hose serves to transmit the pressure fluid to the brake operating means.

In the case of mountain bikes, it has been customary to provide a generally U-shaped inverted front suspension fork having a pair of downwardly extending leg portions the upper ends of which are connected with the steering column and bicycle frame by shock absorber means, and the lower ends of which are connected respectively with the ends of the axle about which the front wheel rotates. These front suspension forks generally are formed from a suitable light weight metal alloy, such as a steel, magnesium or aluminum alloy, a synthetic plastic material, or a composite metal/plastic material. One manufacturer of such front suspension forks is Answer Products, Inc. of Valencia, California, the assignee of the instant invention. In order to provide such mountain bikes with disk brake means, it has been proposed to provide the lower end of one of the legs of the suspension fork with raised pads that are cast integrally with the leg and to which the mechanical or hydraulic disk brake operating means are bolted.

Various concerns are presented by such disk brake systems for bicycles, such as the protection of the flexible connecting means and the hydraulic or mechanical operating means from physical damage, and from the intrusion of dirt, mud and water. In the aforementioned Tsurmakei et al. patent, it was proposed to provide separate shield means for the hydraulic operating means that is externally clamped to the fork leg, and for the flexible hose that connects the operating means with the remotely-located disk brake actuator means. The present invention was developed to provide an improved easily assembled and manufactured front suspension fork for mountain bikes that avoids the drawbacks of the prior art, and which supports the disk brake operating means and the associated flexible actuator connecting means in a protected, durable positive manner.

### Summary of the Invention

Accordingly, it is a primary object of the present invention to provide an improved front suspension fork for mountain bicycles in which the hydraulic or mechanical disk brake operating means are contained in a protected manner in a housing that is cast integrally with the associated fork leg.

Another object of the invention is to form integrally on the fork leg support means for supporting the flexible connecting means that connect the hand grip actuator means with the brake operating means. In one embodiment, the support means comprises clasp means including a pair of spaced arms that define a space for receiving the flexible hose or the outer sheath of a coaxial cable. In a second embodiment, the fork leg includes means for receiving internally the flexible connecting means in a protected manner. More particularly, the leg contains a longitudinally-extending integrally-formed offset portion defining a protective channel having opposed end walls containing openings through which the flexible connecting means enters and exits, respectively. In another embodiment, the leg includes and integrally-formed tab or eyelet having an opening for receiving the flexible connecting means.

### Brief Description of The Drawing

Other objects and advantages of the invention will become apparent from a study of the following specification, when viewed in the light of the accompanying drawing, in which:
Fig. 1 is a detailed perspective view of a motorcycle of the prior art provided with hand-grip-operated disk brake means associated with the front wheel;
Fig. 2 is a detailed perspective view of a motorcycle disk brake arrangement of the prior art including hydraulic means for operating the disk brake;
Fig. 3 is a detailed elevation view of a motorcycle disk brake including hydraulic operating means having a master cylinder mounted on the hydraulic motor housing;
Fig. 4 is a sectional view of the hydraulic motor operating means of Fig. 3;
Fig. 5 is a sectional view taken through a mechanically-operated disk brake system for motorcycles;
Fig. 6 is a perspective view of a conventional front suspension fork for a mountain bike;
Fig. 7 is a detailed rear perspective view illustrating the manner of mounting and hydraulic disk brake operating motor on the raised pads of the fork of Fig. 6;
Fig. 8-10 are perspective views illustrating three embodiments of the present invention, wherein the disk brake operating means are contained within a housing cast integrally with one leg of the front suspension fork of a mountain bike;
Figs. 11 and 12 are front and right side elevation views, respectively, of a mountain bike front suspension fork according to the present invention;
Fig. 13 is a sectional view taken along line 13-13 of Fig. 8;
Fig. 14 is a sectional view taken along line 14-14 of Fig. 13;
Fig. 15 is a sectional view taken along line 15-15 of Fig. 10;
Figs. 16 and 17 are sectional views taken along line 16-16 and 17-17, respectively, of Fig. 15; and
Fig. 18 is a sectional view taken along line 18-18 of Fig. 9.

### Detailed Description

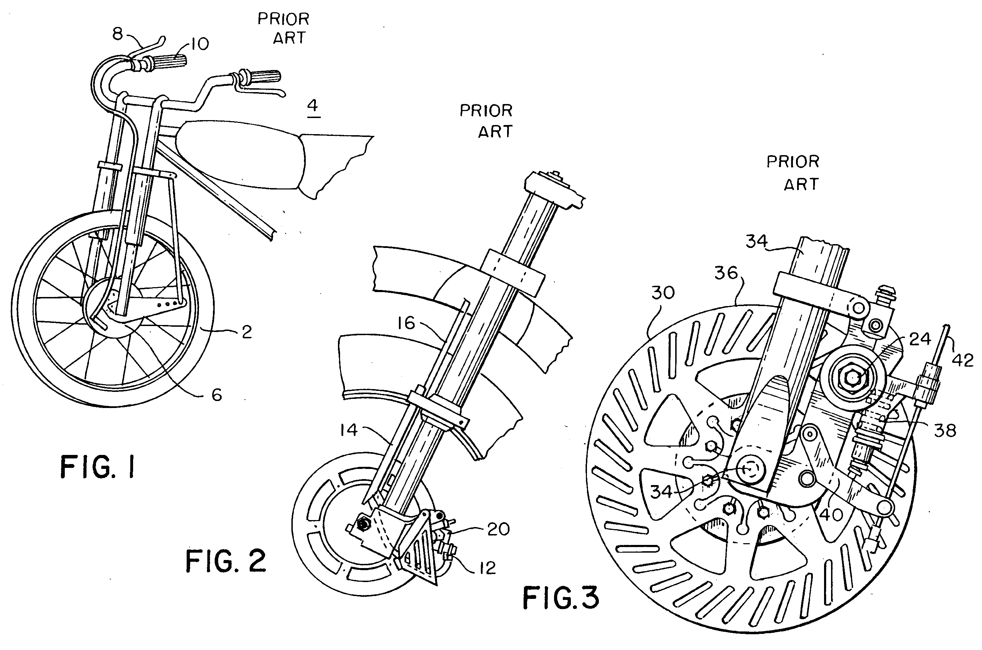

Referring first to Fig. 1, it is well known in the motorcycle art to provide the front wheel 2 of a motorcycle 4 with disk brake means 6 that are operated by hand grip means 8 added on the front handle bars 10. As shown in Fig. 2, it was proposed in the Tsurumaki, et al., Patent No. 5,092,421 to provide shield means 12 for protecting the hydraulic disk brake operating means, and a front fork protector 14 for protecting the hose 16 that supplies pressure fluid to the hydraulic disk brake means 20.

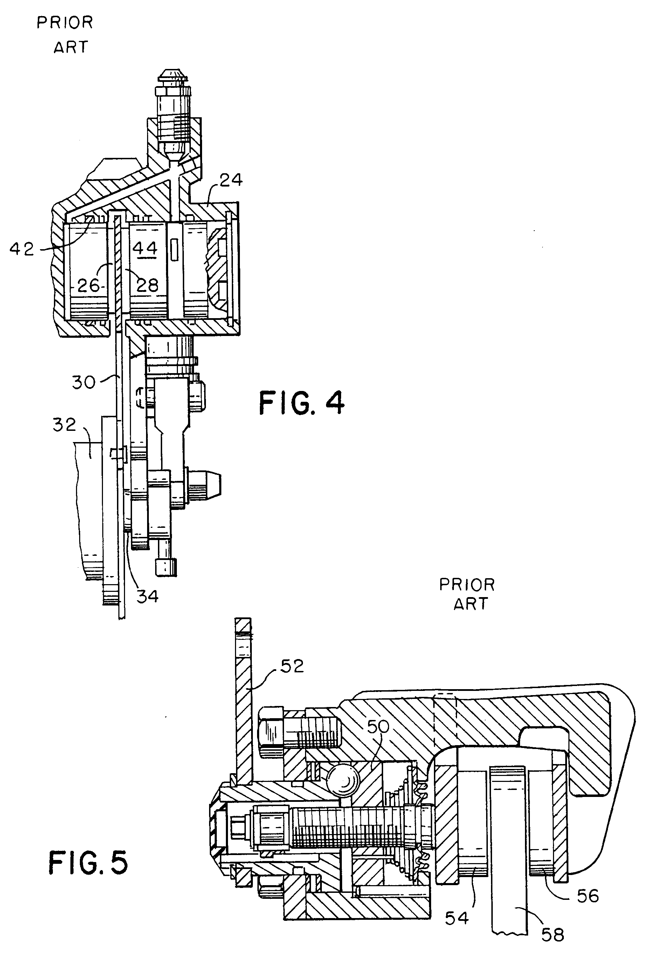

Referring to Figs. 3 and 4, it was proposed in the Hinkens, et al., (Hayes Industrial Brake, Inc.) Patent No. 5,390,771 to provide hydraulic operating means 24 for displacing a pair of spaced brake shoes 26 and 28 on opposite sides of a circular brake disk 30 that is connected with the wheel hub 32 that rotates on axle 34. The hydraulic motor means 24 is clamped to the front fork 34 of the bicycle by clamp means 36. In this embodiment, the master brake cylinder 38 is mounted on the hydraulic brake means 24 for actuation by a lever 40 that is operated by the hand grip via operating cable 42. Thus, upon applying tension to the cable 42, the master brake cylinder supplies pressure fluid to the remote ends of the pistons 42 and 44, thereby to compress the brake shoes 26 and 28 against opposite sides of the circular disk 30.

Fig. 5 illustrates a corresponding mechanical brake actuating means 50 that is operable by lever 52 to compress the brake shoes 54 and 56 against opposite sides of the brake disk 58. The arrangement of Fig. 5 is described in greater detail in the Hunnicutt, et al. (Hayes Industrial Brake, Inc.) Patent No. 5,000,294.

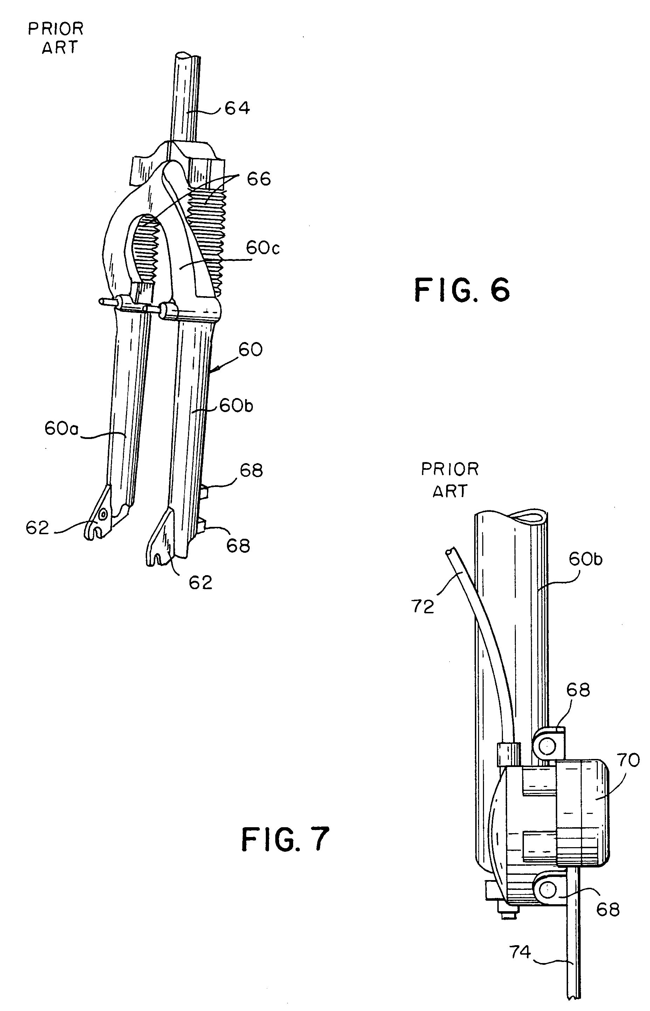

Referring now to Fig. 6, a typical mountain bike front suspension fork is illustrated, such as the MANITOU-type suspension fork produced by Answer Products, Inc., of Valencia, California, the present applicant. The fork 60 is of generally U-shaped configuration including a pair of downwardly extending leg portions 60a and 60b that are joined at their upper ends by a bridging yolk portion 60c. The leg portions of the front suspension fork member -- which is preferably cast from a suitable metal such as steel or aluminum alloy -- are provided at their lower ends with hook potions 62 that are connected with the axle of a conventional mountain bike. At their upper ends, the leg potions 60a and 60b are connected with the steering shaft 64 of the mountain bike via a pair of shock absorbers 66, as is known in the art. The lower rear potion of one leg 60b of the front suspension fork is provided with a pair of vertically spaced raised pads 68 to which are bolted the hydraulic brake means 70, as shown in Fig. 7. Thus, upon the supply of pressure fluid to the hydraulic means 70 via the supply hose 72, the pair of brake shoes (not shown) are compressed on opposite sides of the brake disk 74, thereby to apply braking force to the bicycle.

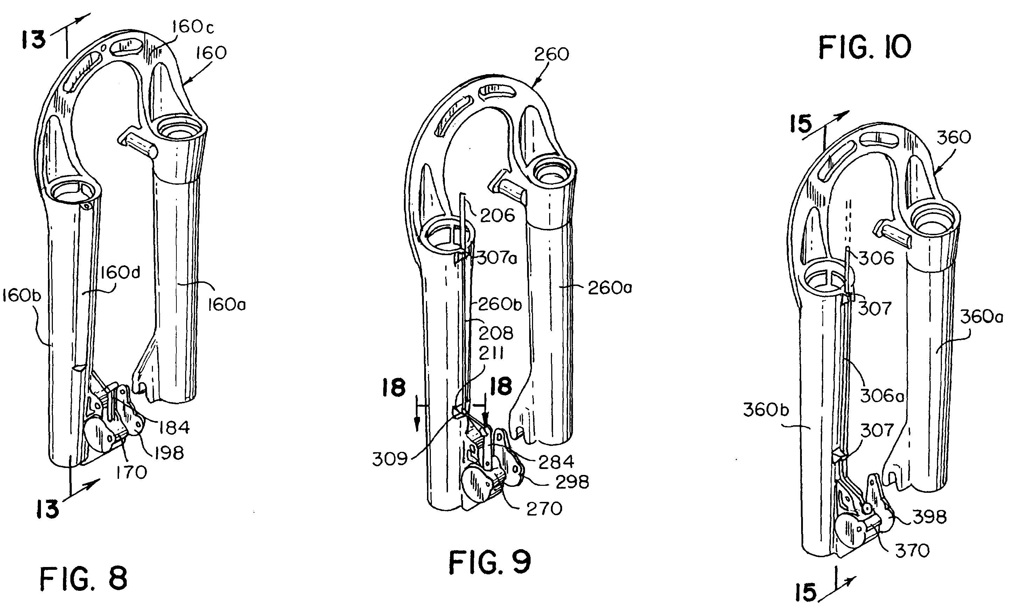

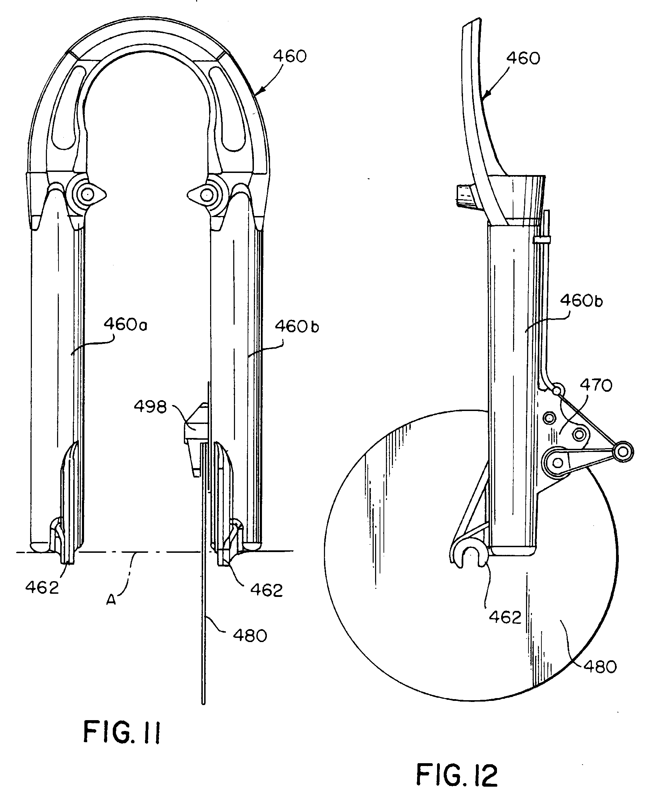

Referring now to Figs. 8-10, three embodiments of the present invention are illustrated which include, in accordance with the present invention, disk brake operating means contained in housings 170, 270, and 370 that are integral with the leg potions 160b, 260b, and 360b of the front suspension forks 160, 260, and 360, respectively. As shown schematically in connection with a fourth embodiment 460 of Figs. 11 and 12, the brake operating means are operable to brake a brake disk 480 that is connected with the bicycle wheel for a rotation about the axis A of an axle (not shown) that is mounted between the mounting brackets 462 at the lower extremities of the leg portions 460a and 460b of the front fork 460.

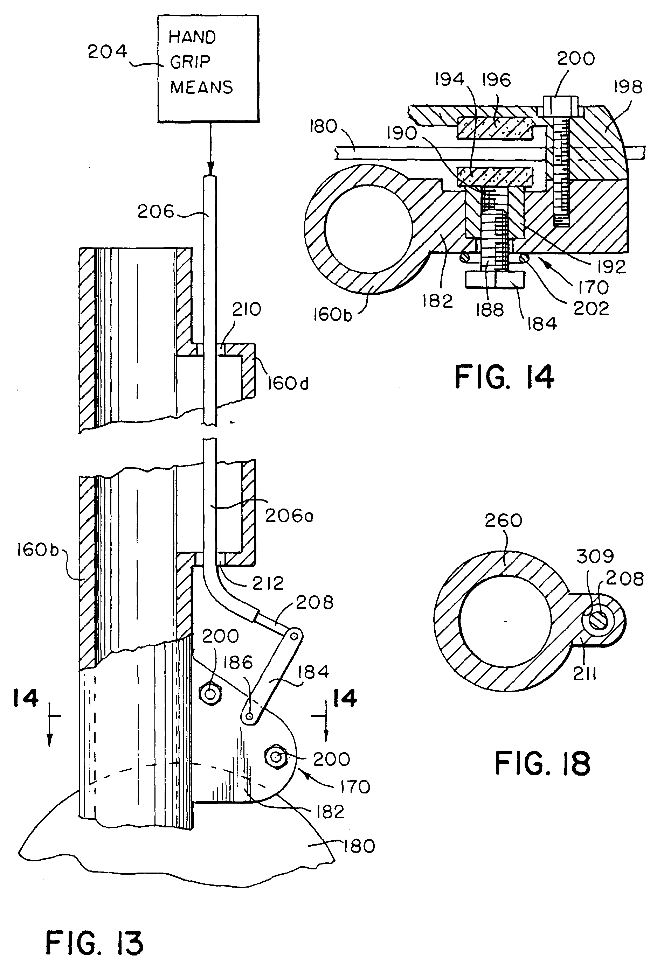

Referring more particularly to the embodiment of Figs. 8, 13, and 14, the brake means 170 includes a brake housing 182 that is cast integrally with the leg portion 160b. As shown in Fig. 14, the brake-operating means is of the mechanical type that is operable by a lever 184 that is pivotally connected at one end with the housing by pivot means 186. Secured to the lever is a screw member 188 that is threadably connected within the threaded bore 190 contained in cylindrical member 192 which is mounted for sliding movement within a chamber contained in the brake housing 182. Carried by the end of the member 192 is a first brake shoe 194 that is formed of sintered metal or other suitable braking material known in the art. The first brake shoe 194 is arranged on one side of the upper portion of the brake disk 180. Mounted on the other side of the brake disk 180 opposite the first brake shoe 194 is a corresponding second brake shoe 196 that is carried by a cover member 198 that is bolted to the housing 182 by bolt means 200. Coil spring 202 normally biases lever 184 toward its illustrated disengaged position in which the brake shoe 194 is retracted toward the disengaged position illustrated in Fig. 14. Lever 184 is operated from the hand grip means 204 via flexible coaxial cable means 206 having an inner movable member 208 that is connected at its lower end with the lever 184. As shown in Fig. 13, the flexible operating means 206 includes an intermediate portion 206a that extends in protected relationship through a longitudinally-offset channel portion 160d that is cast integrally with the leg 160b. Thus, the flexible connecting means 206 passes through aligned openings 210 and 212 contained in the opposite end walls of the offset longitudinal channel portion 160d.

It will be apparent that in order to brake the front wheel of the mountain bicycle, the user operates hand grip means 204 to pivot lever 184 in the counter clockwise direction to cause displacement of the movable brake shoe 194 toward the other brake shoe 196, thereby to brake the disk 180 between the brake shoes.

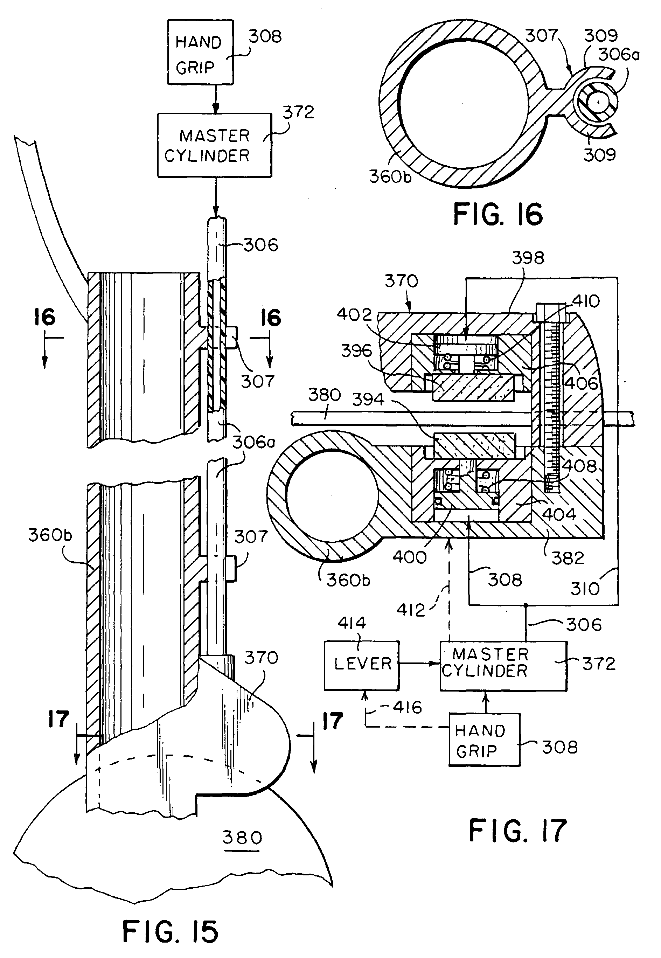

Referring now to Figs. 10 and 15-17, another embodiment is disclosed including hydraulic motor means 370 for braking the associated brake disk 380. As shown in Fig. 17, the brake housing 382 is cast integrally with the leg portion 360b of the mountain bike front suspension fork 360. A pair of brake shoes 394 and 396 are displaced toward or away from each other on opposite sides of the brake disk 380 by means of piston motor means 400 and 402 that are mounted in cylinders 404 and 406, respectively, that are contained in corresponding brake chambers formed in the housing 382 and in the cover section 398, respectively. Compression springs 408 and 410 normally bias the brake shoes 394 and 396 apart toward their deactivated positions relative to the brake disk 380. In this embodiment, the flexible connecting means 306 comprises a hose having an intermediate portion supported against the leg 360b by vertically spaced clip means 307 each including a pair of laterally spaced arms 309 that define a space for receiving the intermediate portion 306a of the hose 306. As shown in Fig. 10, the lower portion of the flexible hose 306 is contiguously supported by the peripheral surface of the housing 370 of the hydraulic motor means. The illustrated embodiment, the hose 306 is connected between the hydraulic motor means 370 and the master cylinder 372 that is arranged adjacent the hand grip means 308.

Referring now to the hydraulic circuit of Fig. 17, when the master cylinder 372 is operated by the hand grip means 308, pressure fluid is supplied to the working chambers associated with pistons 400 and 402, thereby to displace the brake shoes 394 and 396 together on opposite sides of the brake disk 380. Of course, in a manner similar to the embodiment shown in Fig. 3, the master cylinder could be located directly on the housing 382, whereby operation of the master cylinder 372 would be effected by movement of an associated lever 414 from the hand grip 308 via a coaxial cable arrangement 416. Thus, the master cylinder could be remotely located immediately adjacent the hand grip means, or could be located on or directly within a chamber contained within the brake housing 382.

In the embodiment of Fig. 9, the coaxial cable means 206 includes a inner member 208 that extends downwardly from the support clasp means 307a toward an eyelet opening 309 that is contained in the integral tab portion contained in the eyelet portion 211 that is integral with the cast leg portion 260b. The outer sheath of the coaxial cable is supported by the clasp means 307a.

Although the fork members are preferably formed from metal by casting, it is apparent that these elements could be formed equally as well from synthetic plastic or composite materials by machining, molding, or other metal or plastic-working techniques.

While in accordance with the provisions of the Patent Statutes, the preferred forms and embodiments of the invention have been illustrated and described, it will be apparent that various modifications may be made without deviating from the inventive concepts set forth above.

## Claims

1. A front suspension fork for a mountain bike including disk brake means, comprising:
(a) a generally U-shaped inverted suspension fork including a pair of tubular generally-vertical leg portions having upper ends connected by a bridging portion,
(1) said leg portions having lower ends provided with integrally cast axle connecting means adapted for connection with ends, respectively, of the horizontal axle of the associated front wheel of a mountain bike,
(2) one of said leg portions including at its lower end an integral brake housing containing a brake chamber having an opening that communicates with the outer periphery of said one leg portion;
(b) brake caliper means carried by said housing for braking a circular brake disk that is connected with the mountain bike front wheel and that extends between said fork leg portions, said brake caliper means including:
(1) a pair of spaced brake shoes arranged in opposed relation for cooperation with opposite sides of the brake disk;
(2) cover means removably connected with said housing for supporting a first one of said brake shoes at a position adjacent one side of the brake disk; and
(3) operating means arranged at least partially within said brake chamber for displacing a second one of said brake shoes from a normally deactivated position remote from said first brake shoe toward a braking position adjacent said first brake shoe, thereby to effect braking cooperation of said second brake shoe with the other side of the brake disk; and
(c) brake actuating means for causing said operating means to displace second said brake shoe relative to said housing from said deactivated position toward said braking position, said actuating means including:
(1) hand grip means operated by a user of the bicycle at a location remote from said operating means; and
(2) flexible linear connecting means having a pair of ends connected with said hand grip means and with said operating means, respectively.

2. A front suspension fork as defined in claim 1, and further including:
(3) support means integral with said one leg portion for supporting an intermediate portion of said flexible connecting means on said one leg portion.

3. A front suspension fork as defined in claim 2, wherein said support means comprises guide means for guiding said intermediate portion of said flexible connecting means within said one leg portion.

4. A front suspension fork as defined in claim 3, wherein an intermediate longitudinal portion of said one fork leg is laterally offset to define a guide chamber, and further wherein said laterally offset portion contains a pair of wall openings through which said flexible connecting means enters and exits said guide chamber, respectively.

5. A front suspension fork as defined in claim 3, wherein said laterally offset portion includes a pair of opposed end walls that contain said guide openings, respectively.

6. A front suspension fork as defined in claim 2, wherein said support means comprises clip means including a pair of spaced arms formed integrally with and external of said one leg, the spacing distance between said arms being generally equal to the corresponding cross-sectional dimension of said flexible connecting means, thereby to permit removable insertion and removal of said flexible connecting means relative to the space between said arms.

7. A front suspension fork as defined in claim 2, wherein said support means comprises an eyelet formed integrally with and external of said one leg, said eyelet containing a guide opening.

8. A front suspension fork as defined in claim 2, wherein said operating means comprises mechanical means, and further wherein said flexible connecting means comprises a cable having an outer stationary sleeve member and a movable inner wire member.

9. A front suspension fork as defined in claim 8, wherein said operating means further includes an operating lever having a first end pivotally connected with said housing, said operating lever having a second end connected with the associated end of said flexible connecting means.

10. A front suspension fork as defined in claim 2, wherein operating means comprises an hydraulic piston and cylinder motor, and further wherein said flexible connecting means comprises a hose.

11. A front suspension fork as defined in claim 10, wherein said operating means further includes a master cylinder arranged adjacent said hand grip means for operation thereby, said hose extending between said master cylinder and said hydraulic motor.

12. A front suspension fork as defined in claim 2, wherein said operating means includes an hydraulic motor, and a master cylinder mounted on said housing and including an operating lever, and further wherein said flexible connecting means comprises a coaxial cable including an inner wire member connected between said lever and said hand grip means, respectively, and an outer sleeve member connected at one end with said one leg.

13. A front suspension fork as defined in claim 1, wherein said suspension fork is formed by casting.

14. A front suspension fork as defined in claim 13, where said suspension fork is formed of metal.
